# EUROPÄISCHE PATENTANMELDUNG

(11) **EP 2 581 252 A2**
(43) Veröffentlichungstag der Anmeldung: **17.04.2013**
(21) Anmeldenummer: 12179491.1
(22) Anmeldetag: 07.08.2012
(51) Int. Cl.: B60K 6/48, B60K 6/52, B60K 6/34

(54) **Anordnung mit einer elektrisch betriebenen Achse für einen Allradantrieb eines Kraftfahrzeugs**

(30) Priorität: 12.10.2011 DE 102011084322
(71) Anmelder: ROBERT BOSCH GMBH, 70442 Stuttgart (DE)
(72) Erfinder: Peuser, Thomas, 71636 Ludwigsburg (DE); Deflorio, Andrea, 70190 Stuttgart (DE); Hu, Wei, 71397 Weiler Zum Stein (DE); Merkel, Tino, 71701 Schwieberdingen (DE)

(57) **Zusammenfassung**

Die Erfindung geht aus von einer Anordnung mit einer Verbrennungskraftmaschine (4), einem Generator (6, 32) und einem Elektromotor (8, 34) für einen Allradantrieb eines Kraftfahrzeugs, wobei ein erstes Radpaar (12), das mit einer ersten Achse (10) des Kraftfahrzeugs verbunden ist, ausschließlich durch die Verbrennungskraftmaschine (4) antreibbar ist. Erfindungsgemäß ist ein zweites Radpaar (18), das mit einer zweiten Achse (16) des Kraftfahrzeugs verbunden ist, ausschließlich durch den Elektromotor (8, 34) antreibbar. Der Generator (6, 32) ist zur Erzeugung elektrischer Energie mit der Verbrennungskraftmaschine (4) koppelbar. Der Elektromotor (8, 34) ist ausschließlich mit der durch den Generator (6, 32) erzeugten elektrischen Energie betreibbar. Die elektrische Energie wird von dem Elektromotor (8, 34) in einer vorbestimmten Stromart benötigt, wobei die elektrische Energie durch den Generator (6, 32) in der vorbestimmten Stromart erzeugt wird.

## Beschreibung

### Stand der Technik

Allradantrieb wird in Fahrzeugen hauptsächlich zur Erhöhung der Traktion eingesetzt. Zum einen ist durch die erhöhte Traktion eine gewisse Geländegängigkeit der Fahrzeuge überhaupt erst ermöglicht. Zum anderen dient die erhöhte Traktion auch beim Einsatz auf der Straße zur Verbesserung des Fahrverhaltens. Durch den Antrieb aller den Boden berührenden Räder wird der Schlupf jedes einzelnen Rades minimiert. Hierbei bietet der Allradantrieb die Möglichkeit, die zunehmende Motorleistung der Kraftfahrzeuge auf die Straße zu übertragen, verbunden mit dem Vorteil einer verbesserten Fahrstabilität. Gerade bei Straßenfahrzeugen bieten einige Hersteller neben ihren Modellen mit Front- und/oder Heckantrieb auch Modelle mit Allradantrieb an. Die derzeit häufigste Variante besteht aus einem einzelnen Antrieb mittels einer Verbrennungskraftmaschine, dessen Leistung auf mehrere Achsen und Räder verteilt wird. Hierbei wird zwischen differentialgesteuerten oder permanenten Allradantrieben sowie kupplungsgesteuerten Allradantrieben unterschieden. Bei den kupplungsgesteuerten Allradantrieben wird eine Achse permanent angetrieben, wohingegen die andere Achse nur unter bestimmten Voraussetzungen über eine Kupplung mit Antriebsleistung versorgt wird. Die Kupplung kann entweder manuell oder aufgrund von elektrisch und/oder elektronisch ermittelten Parametern automatisch zuschaltbar ausgestaltet sein.

Durch einen fehlenden Drehzahlausgleich der starren Verbindung kann es zu Verspannungen im Antriebsstrang und gelegentlichen Geräuschen beim Einparken kommen. Bei Kurvenfahrten folgen die Vorderräder einem größeren Radius und müssen sich schneller drehen als die Hinterräder, werden aber gezwungen, aufgrund der starren Verbindung genauso schnell zu drehen wie die Hinterräder. Weiterhin weisen Fahrzeuge mit zuschaltbarem Allradantrieb gegenüber Fahrzeugen mit permanentem Allradantrieb keinen Minderverbrauch von Treibstoff auf, weil auch bei nicht angetriebener zweiter Achse sich deren Antriebsstrang mitdreht und deshalb Planschverluste und/oder Reibungsverluste auftreten. Auch sind Fahrzeuge mit Allradantrieb aufgrund zusätzlicher mechanischer Komponenten in der Regel erheblich teurer als vergleichbare Fahrzeuge mit nur einer angetriebenen Achse.

### Zusammenfassung der Erfindung

Es kann daher ein Bedürfnis bestehen, einen Allradantrieb eines Fahrzeugs zu gestalten, der zuschaltbar und preiswert herstellbar ist.

Dieses Bedürfnis kann durch den Gegenstand des unabhängigen Anspruchs gelöst werden. Weitere vorteilhafte Ausgestaltungen ergeben sich durch die Gegenstände der abhängigen Ansprüche.

Gemäß einem ersten Ausgestaltungsbeispiel der Erfindung wird eine Anordnung mit einer Verbrennungskraftmaschine, einem Generator und einem Elektromotor für einen Allradantrieb eines Fahrzeugs bereitgestellt. Ein erstes Radpaar, das mit einer ersten Achse des Kraftfahrzeugs verbunden ist, ist ausschließlich durch die Verbrennungskraftmaschine antreibbar. Ein zweites Radpaar, das mit einer zweiten Achse des Kraftfahrzeugs verbunden ist, ist ausschließlich durch den Elektromotor antreibbar. Der Generator ist zur Erzeugung elektrischer Energie mit der Verbrennungskraftmaschine koppelbar. Der Elektromotor ist ausschließlich mit der durch den Generator erzeugten elektrischen Energie betreibbar. Die elektrische Energie wird von dem Elektromotor in einer vorbestimmten Stromart benötigt, wobei die elektrische Energie durch den Generator in der vorbestimmten Stromart erzeugt wird.

Somit kann die gesamte elektrische Leistung, die von dem Generator erzeugt wird, dem Elektromotor zugeführt werden. Unter gleicher Stromart ist entweder Gleichstrom oder Wechselstrom zu verstehen, wobei unter dem Begriff Wechselstrom hier Wechselstrom mit nur einer Phasenlage sowie Wechselstrom mit verketteten separaten Phasenlagen zu verstehen ist. Die spezielle Form von Wechselstrom mit drei Phasen wird als Dreiphasenwechselstrom, umgangssprachlich auch als "Drehstrom", bezeichnet. Durch die Wahl der gleichen Stromart der elektrischen Energie von Elektromotor und Generator wird vermieden, dass die eine Stromart wie beispielsweise Gleichstrom in eine andere Stromart wie beispielsweise Wechselstrom umgewandelt werden muss, wie dies beispielsweise durch Wechselrichter, auch Inverter genannt, die Gleichspannung in Wechselspannung umspannen, erfolgen kann. Damit kann auf Inverter, Wechselrichter und ähnliches verzichtet werden. Durch eine Ausgestaltung der Anordnung, nämlich dass die gesamte durch den Generator erzeugte elektrische Energie dem Elektromotor zugeführt wird, kann auf die Verwendung von Batterien verzichtet werden, die den Elektromotor mit elektrischer Energie während seines Betriebes versorgen würden. Durch die Verwendung des Elektromotors zum Antrieb der zweiten Achse kann auf die beim konventionellen Allradantrieb erforderliche Kardanwelle mitsamt ihren Gelenken und Kupplungen verzichtet werden. Da Elektromotoren preiswert herzustellen sind, werden Kosten gegenüber dem konventionellen Kardanwellenbetrieb eingespart. Weiterhin kann die Anordnung derart gestaltet sein, dass der Elektromotor nur bei Bedarf zugeschaltet wird, so dass in der Regel das Fahrzeug nur mittels der mit der Verbrennungskraftmaschine verbundenen Achse angetrieben wird. Der hier beschriebene Allradantrieb, der unter Verwendung eines Elektromotors realisiert wird, führt auch zu einer Einsparung von Treibstoff, da nur dann vermehrt Treibstoff benötigt wird, wenn der Elektromotor auch angetrieben wird. So ist es beispielsweise möglich, dass, wenn das erste Radpaar der ersten Achse, welches ausschließlich durch die Verbrennungskraftmaschine angetrieben ist, gegenüber dem Boden einen Schlupf aufweist, der höher als zulässig ist, der ausschließlich das zweite Radpaar der zweiten Achse des Kraftfahrzeugs antreibende Elektromotor zugeschaltet wird. Für die hier durchgeführten Betrachtungen ist es unerheblich, ob die Verbrennungskraftmaschine an eine Vorderachse oder eine Hinterachse gekoppelt ist. In idealer Weise soll die Umfangsgeschwindigkeit aller Räder unter Vernachlässigung von Schlupf bei einer Geradeausfahrt des Fahrzeugs gleich sein, wenn beide Achsen angetrieben sind. Natürlich ist es auch möglich, zwischen Verbrennungsmotor und erster Achse, wie allgemein üblich, ein Getriebe zu koppeln. Die hier und im Folgenden dargestellten Betrachtungen sind dann natürlich auf die Drehzahl der durch den Verbrennungsmotor getriebenen Räder, respektive der ersten Achse, und nicht auf die Drehzahl des Verbrennungsmotors abzustellen.

Gemäß einem weiteren Ausgestaltungsbeispiel der Erfindung erzeugt der Generator Gleichstrom und der Elektromotor ist ein Gleichstrommotor.

Die Auslegung der elektrischen Maschinen (Gleichstromgenerator und Gleichstrommotor) und des Antriebsstranges erfolgt derart, dass die Drehzahlen der einzelnen Räder des Fahrzeugs im Nennbetriebsbereich im Idealfall, also ohne weitere äußere Einflüsse, gleich sind. Wenn nun die Verbrennungskraftmaschine schneller dreht, kann sich auch der Generator schneller drehen und erzeugt hierbei eine höhere Spannung und damit eine höhere elektrische Energie. Dies führt nun dazu, dass die erhöhte elektrische Energie dem Gleichstrommotor zugeführt wird, wobei hierdurch veranlasst der Gleichstrommotor ebenfalls schneller dreht, so dass die Drehzahlen der einzelnen Räder wieder aneinander angepasst sind. Weiterhin kann beispielsweise durch Zwischenschalten eines Getriebes an geeigneter Stelle erreicht werden, dass die Umdrehungszahl des ersten Radpaares der Umdrehungszahl des zweiten Radpaares entspricht. Auch kann das Getriebe derart gestaltet sein, dass das erste Radpaar, sofern das erste Radpaar durch eine Vorderachse eines Fahrzeugs angetrieben ist, schneller dreht als das zweite Radpaar. Dies kann positive Auswirkungen auf die Fahrstabilität des Kraftfahrzeugs, insbesondere auf Straße, haben.

Gemäß einem weiteren Ausgestaltungsbeispiel der Erfindung erzeugt der Generator bei einer Nenndrehzahl eine höhere elektrische Energie, als der Elektromotor bei der Nenndrehzahl benötigt.

Durch die Erzeugung einer höheren elektrischen Energie ist es möglich, Verluste zu kompensieren. Diese Verluste können einerseits mechanischer Natur sein, beispielsweise verursacht durch Reibung in einem Umlenkgetriebe, Reibung in Ausgleichsgelenken der Gelenkwellen sowie durch zulässigen Schlupf an den Rädern gegenüber dem Boden. Andererseits können auch elektrische Verluste beispielsweise durch Übertragung der elektrischen Energie mittels Kupferleitungen auftreten.

Gemäß einem weiteren Ausgestaltungsbeispiel der Erfindung erzeugt der Generator bei der Nenndrehzahl eine zwischen 5 % und 50 % höhere Energie, als der Elektromotor bei der Nenndrehzahl benötigt.

Gemäß einem weiteren Ausführungsbeispiel der Erfindung ist die durch den Generator erzeugte elektrische Energie mittels eines Steuergeräts an die von dem Elektromotor benötigte Energie angepasst.

Mittels des Steuergeräts kann beispielsweise die von dem Generator erzeugte Spannung gesteuert werden, bevor sie dem Elektromotor zugeführt wird. Somit ist es beispielsweise möglich, das Drehmoment, welches dem zweiten Radpaar mittels des Gleichstrommotors zugeführt wird, durch die Steuerung der Spannung zu regulieren. Wenn das ausschließlich von der Verbrennungskraftmaschine angetriebene erste Radpaar gegenüber dem Boden einen über einen vorbestimmten Grenzwert hinausgehenden und damit unerwünschten Schlupf aufweist und damit die Drehzahl der Verbrennungskraftmaschine steigt, wird aufgrund der steigenden Drehzahl des Generators auch das durch den Generator erzeugte Spannungsniveau steigen. Damit kann die zur Verfügung stehende elektrische Energie erhöht werden. Durch die Steuerung der Spannung kann der Elektromotor derart betrieben werden, dass das zweite Radpaar sich mit zulässigem Schlupf gegenüber dem Boden dreht.

Gemäß einem weiteren Ausgestaltungsbeispiel der Erfindung ist das Steuergerät als ein Pulsbreitenmodulations-Steuergerät ausgebildet.

Hierbei kann das Pulsbreitenmodulations-Steuergerät, das auch als Pulsweitenmodulations-Steuergerät oder Pulsdauermodulations-Steuergerät bezeichnet wird, zwischen dem Gleichspannung erzeugenden Generator und dem Gleichstromotor angeordnet sein, so dass ein von dem Generator erzeugtes erstes Spannungsniveau mittels des Pulsdauermodulations-Steuergeräts auf zweites Spannungsniveau gebracht wird, welches dem Gleichstrommotor zugeführt werden kann. Bei einer Tiefsetzstelle der Pulsdauermodulation ist das erste Spannungsniveau höher als das zweite Spannungsniveau. Natürlich könnte das Pulsdauermodulations-Steuergerät auch in dem Modus eines Hochsetzstellers verwendet werden, bei dem das erste Spannungsniveau niedriger als das zweite Spannungsniveau wäre. Die hier beschriebene Reduzierung des Spannungsniveaus erfolgt gemäß einem Tastgrad der Pulsdauermodulation, welches das Verhältnis einer Impulsdauer zu einer Impulsperiodendauer beschreibt. Hierbei wäre dann die Impulsperiodendauer die Summe aus Einschaltdauer und Ausschaltdauer, wohingegen die Impulsdauer lediglich die Einschaltdauer wäre. So wäre vereinfacht ausgesprochen bei einem Tastgrad von 50% die Einschaltdauer 50% und damit das zweite Spannungsniveau um 50% geringer als das erste Spannungsniveau. Da nur eine einfache und langsame Steuerung des Spannungsniveaus notwendig ist, ist zur Erzeugung des zweiten Spannungsniveaus auch nur eine sehr einfache Leistungselektronik notwendig, die preiswert herzustellen ist. Durch die Steuerung kann das zweite Spannungsniveau derart gesteuert werden, dass mit zunehmendem Schlupf an dem von der Verbrennungskraftmaschine angetriebenen ersten Radpaar die dem Gleichstrommotor zugeführte elektrische Energie steigt und damit das Drehmoment an dem zweiten Radpaar solange zunimmt, bis dort der maximal zulässige Schlupf erreicht ist.

Gemäß einem weiteren Ausgestaltungsbeispiel der Erfindung läuft bei ausschließlichem Antrieb des ersten Radpaares der Gleichspannung erzeugende Generator elektrisch leistungsfrei mit.

Der Antrieb des Fahrzeugs erfolgt dann verbrauchsoptimiert, da das zweite Radpaar nicht angetrieben ist. Durch das leistungsfreie Mitlaufen des Generators müssen durch die Verbrennungskraftmaschine nur die mechanischen Verluste des Generators, wie beispielsweise Lagerreibung, kompensiert werden.

Gemäß einem weiteren Ausführungsbeispiel der Erfindung erzeugt der Generator Dreiphasenwechselstrom und der Elektromotor ist ein Synchronmotor.

Hierbei erzeugt der Generator einen von der Drehzahl des Generators, respektive der Verbrennungskraftmaschine, abhängigen Dreiphasenwechselstrom. Dieser Dreiphasenwechselstrom wird dem Synchronmotor zugeführt. Hierdurch kann sich der Synchronmotor mit exakt der gleichen Drehzahl wie der Generator drehen.

Gemäß einem weiteren Ausführungsbeispiel der Erfindung erzeugt der Generator eine höhere elektrische Energie, als der Elektromotor benötigt.

Hierdurch ist es möglich, dass mechanische Verluste wie beispielsweise Lagerreibung in dem Elektromotor oder in den Ausgleichsgelenken der Antriebwellen sowie Schlupf des zweiten Radpaares ausgeglichen werden. In der Regel hat die Erzeugung der höheren elektrischen Energie allerdings nur Einfluss auf das durch den Elektromotor erzeugte Drehmoment, nicht jedoch auf dessen Drehzahl, da diese, wie bereits erwähnt, abhängig von der Drehzahl des Generators ist. Somit kann durch die Erhöhung der elektrischen Energie seitens des Generators das durch den Elektromotor zu leistende Drehmoment erhöht werden. Die durch den Generator erzeugte elektrische Energie kann etwa bis 20% höher als die durch den Elektromotor benötigte Energie. Hierbei kann als typischer Wert eine 10 % höhere erzeugte elektrische Energie angesehen werden.

Gemäß einem weiteren Ausgestaltungsbeispiel der Erfindung ist eine von dem Elektromotor erzeugte Drehzahl mittels eines Drehzahlwandlers wandelbar.

Durch diesen Drehzahlwandler kann die Drehzahl des zweiten Radpaares an die Drehzahl des ersten Radpaares angeglichen werden. Mittels eines Übersetzungsverhältnisses von 0,8 bis etwa 1,4 des Drehzahlwandlers kann die Drehzahl des zweiten Radpaares der zweiten Achse zwischen 80 % und 140 % der Umdrehungszahl des ersten Radpaares der ersten Achse sein. Hierbei kann der Drehzahlwandler ein festes Untersetzungsverhältnis aufweisen oder auch stufenweise schaltbar sein.

Gemäß einem weiteren Ausgestaltungsbeispiel der Erfindung ist der Drehzahlwandler ein stufenloses Getriebe.

Hierbei eignet sich insbesondere ein CVT(Continuously variable transmission)-Getriebe, welches ein gleichförmiges Getriebe ist.

Gemäß einem weiteren Ausführungsbeispiel der Erfindung ist der Drehzahlwandler zwischen der Verbrennungskraftmaschine und dem Generator angeordnet.

Somit kann also die Drehzahl des Generators im Verhältnis zu der Drehzahl der Verbrennungskraftmaschine gesteuert oder geregelt werden.

Gemäß einem weiteren Ausführungsbeispiel der Erfindung ist der Drehzahlwandler zwischen dem Elektromotor und der zweiten Achse angeordnet.

Hierdurch wird also die Drehzahl, mit der der Elektromotor die zweite Achse antreibt, durch den Drehzahlwandler gewandelt.

Es wird angemerkt, dass Gedanken zu der Erfindung hierin in Zusammenhang mit einer Anordnung mit einer Verbrennungskraftmaschine, einem Generator und einem Elektromotor für einen Allradantrieb eines Kraftfahrzeugs beschrieben sind. Einem Fachmann ist hierbei klar, dass die einzelnen beschriebenen Merkmale auf verschiedene Weise miteinander kombiniert werden können, um so auch zu anderen Ausgestaltungen der Erfindung zu gelangen.

### Kurze Beschreibung der Zeichnungen

Ausführungsformen der Erfindung werden nachfolgend mit Bezug auf die beigefügten Figuren beschrieben. Die Figuren sind lediglich schematisch und nicht maßstabsgetreu.
- Figur 1: zeigt eine Anordnung mit einer Verbrennungskraftmaschine, einem Gleichstromgenerator und einem Gleichstrommotor für einen Allradantrieb eines Kraftfahrzeugs, und
- Figur 2: zeigt eine Anordnung mit einer Verbrennungskraftmaschine, einem Dreiphasenwechselstromgenerator und einem Synchronmotor für einen Allradantrieb eines Kraftfahrzeugs.

### Detaillierte Beschreibung beispielhafter Ausführungsformen

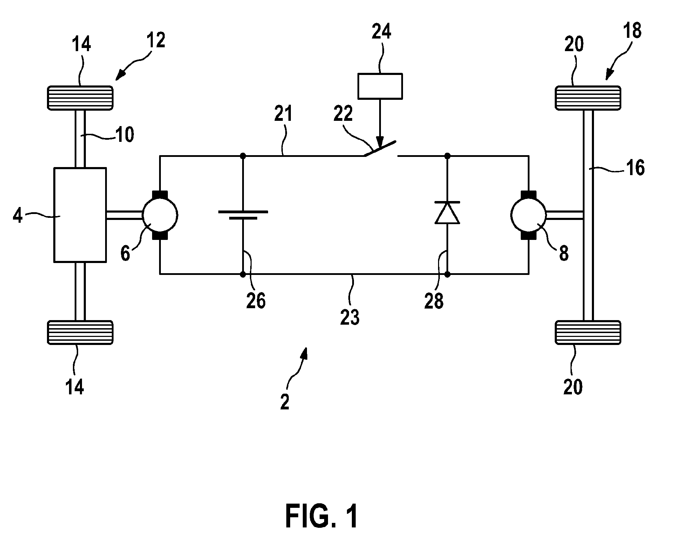

Figur 1 zeigt eine Anordnung 2 mit einer Verbrennungskraftmaschine 4, einem Gleichstromgenerator 6 und einem Gleichstrommotor 8 für einen Allradantrieb eines Kraftfahrzeugs. Hierbei treibt die Verbrennungskraftmaschine 4 eine erste Achse 10 an, die in Eingriff mit einem ersten Radpaar 12 steht, wobei das erste Radpaar 12 aus zwei ersten Rädern 14 besteht. Die Verbrennungskraftmaschine 4 treibt ausschließlich die erste Achse 10 an. Der Gleichstrommotor 8 treibt eine zweite Achse 16 an, wenn ihm elektrische Energie zugeführt wird. Die zweite Achse 16 steht in Eingriff mit einem zweiten Radpaar 18, welches aus zwei zweiten Rädern 20 gebildet ist. Der Gleichstromgenerator 6 ist an die Verbrennungskraftmaschine 4 drehfest gekoppelt. Der Gleichstromgenerator 6 ist mit dem Gleichstrommotor 8 mittels eines Hinleiters 21 und eines Rückleiters 23 elektrisch verbunden. Der Hinleiter 21 ist mittels eines Schalters 22 in Verbindung mit einem Steuergerät 24 unterbrechbar, wobei der Schalter 22 in dem Steuergerät 24 integriert ist und hier nur aus Übersichtlichkeitsgründen als ein separates Bauteil dargestellt ist. Wenn die Verbrennungskraftmaschine 4 die erste Achse 10 antreibt, wird gleichzeitig auch der Gleichstromgenerator 6 derart betrieben, dass er elektrische Energie liefert. Hierbei erzeugt der Generator 6 die elektrische Energie mit einem ersten Spannungsniveau, wobei das Spannungsniveau abhängig ist von der Drehzahl der Verbrennungskraftmaschine 4. In Abhängigkeit der Drehzahl der Verbrennungskraftmaschine 4 rotiert auch das erste Radpaar 12. Wenn nun der Schalter 22 geschlossen ist, so wird die gesamte von dem Gleichstromgenerator 6 erzeugte elektrische Energie unmittelbar dem Gleichstrommotor 8 zugeführt. Der durch den Gleichstromgenerator 6 erzeugte Gleichstrom wird also weder mittels Batterien gespeichert noch in seiner Stromart beispielsweise mittels eines Inverters in Wechselstrom gewandelt. Der Gleichstrommotor 8 wandelt die elektrische Energie in mechanische Energie um und treibt die zweite Achse 16, respektive das zweite Radpaar 18. Hierbei dreht sich der Gleichstrommotor 8 mit der gleichen Drehzahl wie der Gleichstromgenerator 6. Um nun mögliche mechanische und elektrische Verluste kompensieren zu können, wird durch den Gleichstromgenerator 6 eine höhere elektrische Energie erzeugt als der Gleichstrommotor 8 tatsächlich benötigt. Die elektrischen Verluste sind hauptsächlich auf einen elektrischen Widerstand des aus Kupferdraht bestehenden Hinleiters 21 und Rückleiters 23 sowie eines elektrischen Widerstands des Gleichstromgenerators 6 und des Gleichstrommotors 8 zurückzuführen. Die mechanischen Verluste entstehen einerseits durch Reibungen des mechanischen Systems, bestehend aus Reibung innerhalb von Gleichlaufgelenken der die zweiten Räder 20 treibenden Gelenkwellen und Reibung innerhalb eines möglichen Umlenkgetriebes sowie einem Schlupf zwischen den zweiten Rädern 20 und einem hier nicht dargestellten Boden. Hierzu liefert der Gleichstromgenerator 6 bei einer vorgegebenen Nenndrehzahl etwa 30 % mehr elektrische Energie, als der Gleichstrommotor 8 bei der gleichen Nenndrehzahl benötigen würde. Da das an dem Gleichstrommotor 8 erzeugte Drehmoment abhängig von einer Höhe einer zugeführten Spannung ist, wird dementsprechend die durch den Gleichstromgenerator 6 zu erzeugende höhere elektrische Energie durch eine erhöhte Spannung bewirkt. Um weiterhin das Drehmoment des Gleichstrommotors 8 steuern zu können, wird der Schalter 22 durch das Steuergerät 24 geschaltet. Hierbei handelt es sich bei dem Steuergerät 24 um ein Pulsbreitenmodulations(PBM)-Steuergerät, welches auch unter dem Begriff Pulsdauermodulations(PDM)-Steuergerät oder Pulsweitenmodulations(PWM)-Steuergerät bekannt ist. Durch das Pulsbreitenmodulations-Steuergerät 24 wird ein erstes durch den Gleichstromgenerator 6 erzeugtes erstes Spannungsniveau auf ein zweites Spannungsniveau gebracht, welches dem Gleichstrommotor 8 zugeführt wird. Da das PBM-Steuergerät 24 mit einem Tiefsetzsteller arbeitet, ist das erste Spannungsniveau gleich oder größer als das zweite Spannungsniveau. Durch eine Variation eines Tastgrades, wobei der Tastgrad ein Verhältnis von Impulsdauer zur Impulsperiodendauer beschreibt, wird das erste Spannungsniveau auf das zweite Spannungsniveau geändert. Der Hinleiter 21 und der Rückleiter 23 sind sowohl mittels eines Kondensators 26 als auch mittels einer Diode 28 miteinander verbunden. Dabei dient die Diode 28 als bekannte Freilaufdiode. Der Kondensator 26 dient als Puffer zu einer Anpassung des kontinuierlichen Energieflusses aus dem Generator 6 an den durch den Schalter 22 getakteten Energiefluss zu dem Gleichstrommotor 8. Der Kondensator 26 verringert dadurch funktionsbedingte Spannungsüberhöhungen auf ein für die verwendeten elektrischen und/oder elektronischen Bauelemente tolerierbares Maß. Das PWM-Steuergerät 24 ist derart gestaltet, dass der Kondensator 26 und die Diode 28 in dem Steuergerät 24, wie auch der Schalter 22, integriert sind. Mit steigender Impulsdauer pro Impulsperiodendauer nähert sich das zweite Spannungsniveau dem ersten Spannungsniveau. Wenn die Impulsdauer gleich der Impulsperiodendauer ist, entspricht das zweite Spannungsniveau dem ersten Spannungsniveau. Somit wird über eine Steuerung der Länge der Impulsdauer das durch den Gleichstrommotor 8 zu erzeugende Drehmoment gesteuert. Die im Folgenden beschriebene Funktionsweise ist unabhängig davon, ob die Verbrennungskraftmaschine 4 eine Hinterradachse oder eine Vorderradachse des Kraftfahrzeugs treibt. Wenn nun die ausschließlich mittels der Verbrennungskraftmaschine 4 angetriebenen ersten Räder 14 einen vorbestimmten Schlupf überschreiten, wird der Gleichstrommotor 8, welcher die zweiten Räder 20 treibt, zugeschaltet. Mittels des PWM-Steuergeräts 24 wird anhand des Tastgrads das zweite Spannungsniveau derart gesteuert, dass das durch den Gleichstrommotor 8 erzeugte und auf die zweiten Räder 20 übertragene Drehmoment einen zwischen den zweiten Rädern 20 und dem Boden vorbestimmten Schlupf nicht überschreitet. Solange die durch die Verbrennungskraftmaschine 4 angetriebenen ersten Räder 14 einen vorbestimmten Schlupf zwischen den ersten Rädern 14 und dem Boden nicht überschreiten, wird der Gleichstrommotor 8 nicht mit dem Gleichstromgenerator 6 elektrisch verbunden. Somit läuft der Gleichstromgenerator 6 lastfrei, und die Verbrennungskraftmaschine 4 muss lediglich mechanische Verluste des Generators 6, wie beispielsweise Lagerreibung überwinden. Somit ist ein verbrauchsoptimierter und damit treibstoffsparender Betrieb des Fahrzeugs möglich. Dadurch, dass zur Steuerung des zweiten Spannungsniveaus nur eine sehr einfache und langsame Steuerung notwendig ist, kann das PWM-Steuergerät 24 als eine sehr einfache Leistungselektronik aufgebaut sein, wodurch das PWM-Steuergerät 24 preisgünstig herstellbar ist.

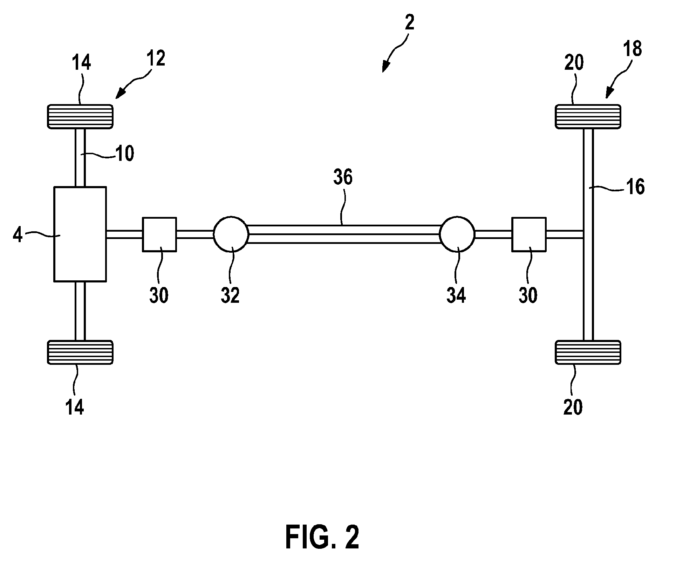

Die Figur 2 zeigt eine Anordnung 2 mit der Verbrennungskraftmaschine 4, einem Dreiphasenwechselstromgenerator 32 und einem Synchronmotor 34 für einen Allradantrieb eines Kraftfahrzeugs. Auch hier treibt die Verbrennungskraftmaschine 4 ausschließlich eine erste Achse 10, welche die ersten Räder 14 des ersten Radpaares 12 antreibt. Der Synchronmotor 34 ist mit der zweiten Achse 16 verbunden, welche die zweiten Räder 20 des zweiten Radpaares 18 antreibt. Auch hier treibt der Synchronmotor 34 ausschließlich die zweite Achse 16 an. Der Dreiphasenwechselstromgenerator 32 ist direkt an dem Synchronmotor 34 mittels einer Verbindung 36 elektrisch verbunden. Die Verbindung 36 ist hier, wie allgemein üblich, als eine dreiadrige Verbindung dargestellt, welche von dem Dreiphasenwechselstromgenerator 32 einen Dreiphasenwechselstrom an den Synchronmotor 34 überträgt. Der Synchronmotor 34 wird ausschließlich mit der durch den Dreiphasenwechselstromgenerator 32 erzeugten Energie versorgt. Somit ist auf mögliche Inverter, welche die Stromart beispielsweise von Gleichstrom nach Wechselstrom ändern, sowie auf mögliche Batterien zur zusätzlichen Energieeinspeisung in den Synchronmotor 34 verzichtet. Der Synchronmotor 34 dreht exakt mit der gleichen Drehzahl wie der Dreiphasenwechselstromgenerator 32, wobei die Drehzahl des Dreiphasenwechselstromgenerators 32 abhängig von der Drehzahl der Verbrennungskraftmaschine 4 ist. In der Regel ist die durch den Dreiphasenwechselstromgenerator 32 bereitgestellte elektrische Energie größer als die durch den Synchronmotor 34 benötigte elektrische Energie. Hierdurch kann verhindert werden, dass der Synchronmotor 34 sein Kippmoment erreicht und damit zum Stillstand gelangt. Zusätzlich werden durch die Erzeugung der höheren elektrischen Energie mechanische Verluste kompensiert, wie sie beispielsweise durch Getriebe, homokinetische Gelenke in den Gelenkwellen und durch Schlupf der zweiten Räder 20 verursacht werden. Wenn nun die ersten von der Verbrennungskraftmaschine 4 angetriebenen ersten Räder 14 einen zulässigen vorbestimmten Schlupf überschreiten, wird sich die Drehzahl der Verbrennungskraftmaschine 4 aufgrund der verminderten Haftung der ersten Räder 14 mit dem Boden erhöhen. Diese Erhöhung der Drehzahl der Verbrennungskraftmaschine 4 führt zu einer Erhöhung der Drehzahl des Dreiphasenwechselstromgenerators 32 und damit zu einer Erhöhung der Drehzahl des Synchronmotors 34. Um eine Rotationsgeschwindigkeit der zweiten Räder 20 zu steuern, die letztlich aus der Umdrehungsgeschwindigkeit des Dreiphasenwechselstromgenerators 32 resultiert, wird entweder zwischen der Verbrennungskraftmaschine 4 und dem Dreiphasenwechselstromgenerator 32 oder dem Synchronmotor 34 und der zweiten Achse 16 ein Getriebe 30 eingebaut. Dieses Getriebe 30 ist ein CVT(Continuously variable transmission)-Getriebe, welches in einem Übersetzungsverhältnis von ungefähr 0,8 bis 1,4 stufenlos verstellbar ist und ein Gleichlaufgetriebe ist. Damit ist eine Drehzahl der zweiten Räder 20 gegenüber einer Drehzahl der ersten Räder 14 in einem Verhältnis von 80 % bis 140 % steuerbar. Typischerweise ist der Dreiphasenstromgenerator 32 mit der Verbrennungskraftmaschine 4 während des Betriebs drehfest unlösbar verbunden. Über das CVT-Getriebe 30 ist hierbei die Drehzahl der zweiten Räder 20 steuerbar. Somit kann die Drehzahl der zweiten Räder 20 soweit erhöht werden, bis die zweiten Räder 20 einen vorbestimmten zulässigen Schlupf gegenüber dem Boden erreicht haben, wohingegen die ersten Räder 14 bereits den vorbestimmten zulässigen Schlupf bereits überschritten haben.

Wenn für das Fahrzeug lediglich ein Antrieb von nur der durch die Verbrennungskraftmaschine 4 angetriebenen ersten Achse 10 gewünscht ist, kann der Energiefluss zwischen dem Dreiphasenwechselstromgenerator 32 und dem Synchronmotor 34 unterbunden werden. Hierzu wird mittels des CVT-Getriebes 30 das Drehzahlverhältnis zwischen der ersten 10 und der zweiten Achse 16 derart eingestellt, dass der Schlupf der zweiten Räder 20 idealerweise Null ist. Damit wird kein Drehmoment und damit auch keine Leistung mehr an die zweite Achse 16 übertragen. Auch kann das Getriebe 30 in ein Übersetzungsverhältnis von 1,0 eingestellt werden. Damit ist die Drehzahl der ersten Achse 10 und die Drehzahl der zweiten Achse 16 gleich. Damit ist der Schlupf der Räder 14, 20 bei gleichbleibender Bodenbeschaffenheit ebenfalls idealerweise gleich.

Wenn die ausschließlich durch die Verbrennungskraftmaschine 4 angetriebenen ersten Räder 14 einen vorbestimmten zulässigen Schlupf überschreiten, wird entsprechend die Drehzahl an der zweiten Achse 16 durch den Synchronmotor 34 derart erhöht, dass die gewünschte Kaftverteilung an den Achsen 10, 16 erreicht wird.

## Patentansprüche

1. Anordnung mit einer Verbrennungskraftmaschine (4), einem Generator (6, 32) und einem Elektromotor (8, 34) für einen Allradantrieb eines Kraftfahrzeugs,
wobei ein erstes Radpaar (12), das mit einer ersten Achse (10) des Kraftfahrzeugs verbunden ist, ausschließlich durch die Verbrennungskraftmaschine (4) antreibbar ist,
**dadurch gekennzeichnet,**
**dass** ein zweites Radpaar (18), das mit einer zweiten Achse (16) des Kraftfahrzeugs verbunden ist, ausschließlich durch den Elektromotor (8, 34) antreibbar ist,
**dass** der Generator (6, 32) zur Erzeugung elektrischer Energie mit der Verbrennungskraftmaschine (4) koppelbar ist,
**dass** der Elektromotor (8, 34) ausschließlich mit der durch den Generator (6, 32) erzeugten elektrischen Energie betreibbar ist,
**dass** die elektrische Energie von dem Elektromotor (8, 34) in einer vorbestimmten Stromart benötigt wird, wobei die elektrische Energie durch den Generator (6, 32) in der vorbestimmten Stromart erzeugt wird.

2. Anordnung nach Anspruch 1,
**dadurch gekennzeichnet, dass**
der Generator (6) Gleichstrom erzeugt und der Elektromotor ein Gleichstrommotor (8) ist.

3. Anordnung nach Anspruch 2,
**dadurch gekennzeichnet, dass**
der Generator (6) bei einer Nenndrehzahl eine höhere elektrische Energie erzeugt als der Elektromotor (8) bei der Nenndrehzahl benötigt.

4. Anordnung nach Anspruch 2 und 3,
**dadurch gekennzeichnet, dass**
die von dem Generator (6) erzeugte elektrische Energie mittels eines Steuergeräts (24) an die von dem Elektromotor (8) benötigte Energie angepasst ist.

5. Anordnung nach Anspruch 1,
**dadurch gekennzeichnet, dass**
der Generator (32) Dreiphasenwechselstrom erzeugt und der Elektromotor (34) ein Synchronmotor ist.

6. Anordnung nach Anspruch 5,
**dadurch gekennzeichnet, dass**
der Generator (32) eine höhere elektrische Energie erzeugt als der Elektromotor (34) benötigt.

7. Anordnung nach Anspruch 5 oder 6,
**dadurch gekennzeichnet, dass**
eine von dem Elektromotor (34) erzeugte Drehzahl mittels eines Drehzahlwandlers (30) wandelbar ist.

8. Anordnung nach Anspruch 7,
**dadurch gekennzeichnet, dass**
der Drehzahlwandler (30) ein stufenloses Getriebe ist.

9. Anordnung nach Anspruch 7 oder 8,
**dadurch gekennzeichnet, dass**
der Drehzahlwandler (30) zwischen der Verbrennungskraftmaschine (4) und dem Generator (32) angeordnet ist.

10. Anordnung nach Anspruch 7 oder 8,
**dadurch gekennzeichnet, dass**
der Drehzahlwandler (30) zwischen dem Elektromotor (34) und der zweiten Achse (16) angeordnet ist.
